# EUROPÄISCHE PATENTANMELDUNG

(11) **EP 4 450 856 A1**
(43) Veröffentlichungstag der Anmeldung: **23.10.2024**
(21) Anmeldenummer: 24158487.9
(22) Anmeldetag: 19.02.2024
(51) Int. Cl.: F16K 27/08, F16K 27/10

(54) **AUFSATZVORRICHTUNG FÜR EIN STELLVENTIL UND STELLVENTIL MIT DER AUFSATZVORRICHTUNG**

(30) Priorität: 18.04.2023 DE 102023109695
(71) Anmelder: Samson Aktiengesellschaft, 60314 Frankfurt am Main (DE)
(72) Erfinder: Jünemann, Sven, 63486 Bruchköbel (DE); Hörschken, Klaus, 65606 Villmar (DE); Jacoby, Hendric, 65933 Frankfurt am Main (DE)
(74) Vertreter: noventive Patentanwaltsgesellschaft mbH

(57) **Zusammenfassung**

Die Erfindung geht aus von einer Aufsatzvorrichtung für ein Stellventil (10) einer prozesstechnischen Anlage, mit zumindest einem Grundkörper (36), der einen Deckelabschnitt (38) umfasst, wobei der Deckelabschnitt (38) dazu vorgesehen ist, eine Öffnung (30) eines Ventilgehäuses (12) des Stellventils (10) zu verschließen, wobei der Grundkörper (36) eine Mittelachse (42) aufweist, die sich durch den Deckelabschnitt (38) erstreckt, wobei der Grundkörper (36) eine Verbindungswandung (32) ausbildet, die als Teil des Deckelabschnitts (38) ausgebildet ist und dazu vorgesehen ist, stoffschlüssig mit dem Ventilgehäuse (12), insbesondere einer Wandung des Ventilgehäuses (12), verbunden zu werden, wobei sich die Verbindungswandung (32) entlang der Mittelachse (42) betrachtet im Wesentlichen vollständig um die Mittelachse (42) erstreckt, wobei der Grundkörper (36) über die Verbindungswandung (32) am Deckelabschnitt (38) zur Mittelachse (42) hin eine Ausnehmung (44) begrenzt, und mit zumindest einem Aufnahmefortsatz (46), der zu einer Aufnahme einer Stellstange (26) des Stellventils (10) vorgesehen ist und sich am Deckelabschnitt (38) zu einer Stirnseite (48) des Grundkörpers (36) hin erstreckt, wobei der Aufnahmefortsatz (46) von der Stirnseite (48) aus entlang der Mittelachse (42) betrachtet zumindest teilweise vor der Verbindungswandung (32) angeordnet ist und die Ausnehmung (44) an einer Außenseite begrenzt.

Es wird vorgeschlagen, dass der Aufnahmefortsatz (46) zumindest eine Zirkulationsführung (50) ausbildet, die dazu vorgesehen ist, in einem mit dem Ventilgehäuse (12) verbundenen Zustand eine Fluidkammer (52) des Ventilgehäuses (12) fluidtechnisch mit der Ausnehmung (44) zu verbinden.

## Beschreibung

Es sind bereits Aufsatzvorrichtungen für Stellventile bekannt, welche üblicherweise über ein Flansch-System oder ähnliche Verbindungssysteme auf Gehäuseteilen eines Stellventils montierbar sind. Solche Verbindungen können bei besonderen Prozessbedingungen, wie hohen oder niedrigen Temperaturen, einer Verwendung von speziellen Medien o.dgl. Probleme mit der Dichtigkeit aufweisen können. Es sind auch bereits mit einem Gehäuse eines Stellventils verschweißte Aufsatzvorrichtungen bekannt, welche jedoch über eine flache Verbindungsfläche mit dem Gehäuse verbunden werden, wobei die Verbindungsstelle direkt einen Außenraum von einer inneren Durchführung trennt.

### Vorteile der Erfindung

Die Erfindung geht aus von einer Aufsatzvorrichtung für ein Stellventil einer prozesstechnischen Anlage, wie beispielsweise einer Chemieanlage, eines Kraftwerks, einer Lebensmittel verarbeitenden Anlage oder dergleichen, mit zumindest einem Grundkörper, der einen Deckelabschnitt umfasst, wobei der Deckelabschnitt dazu vorgesehen ist, eine Öffnung eines Ventilgehäuses des Stellventils zu verschließen, wobei der Grundkörper eine Mittelachse aufweist, die sich durch den Deckelabschnitt erstreckt, wobei der Grundkörper eine Verbindungswandung ausbildet, die als Teil des Deckelabschnitts ausgebildet ist und dazu vorgesehen ist, stoffschlüssig mit dem Ventilgehäuse, insbesondere einer Wandung des Ventilgehäuses, verbunden zu werden, wobei sich die Verbindungswandung entlang der Mittelachse betrachtet im Wesentlichen vollständig um die Mittelachse erstreckt, wobei der Grundkörper über die Verbindungswandung am Deckelabschnitt zur Mittelachse hin eine Ausnehmung begrenzt, und mit zumindest einem Aufnahmefortsatz, der zu einer Aufnahme einer Stellstange des Stellventils vorgesehen ist und sich am Deckelabschnitt zu einer Stirnseite des Grundkörpers hin erstreckt, wobei der Aufnahmefortsatz von der Stirnseite aus entlang der Mittelachse betrachtet zumindest teilweise vor der Verbindungswandung angeordnet ist und die Ausnehmung an einer Außenseite begrenzt.

Es wird vorgeschlagen, dass der Aufnahmefortsatz zumindest eine Zirkulationsführung ausbildet, die dazu vorgesehen ist, in einem mit dem Ventilgehäuse verbundenen Zustand eine Fluidkammer des Ventilgehäuses fluidtechnisch mit der Ausnehmung zu verbinden.

Durch eine erfindungsgemäße Ausgestaltung der Aufsatzvorrichtung können bei einem Verbinden mit einem Stellventil abgetrennte Toträume innerhalb des Stellventils vorteilhaft verhindert werden. Die zu einem Verschweißen vorteilhaft ausgebildete Ausnehmung innen an der Verbindungswandung kann durch die zumindest eine Zirkulationsführung fluidtechnisch mit einer Fluidkammer des Ventilgehäuses verbunden werden. Dadurch kann ein Durchspülen der Ausnehmung nach einer Verbindung der Aufsatzvorrichtung mit dem Ventilgehäuse ermöglicht werden. Durch die Ausnehmung und die die Ausnehmung verbindenden Zirkulationsführung kann eine Formierung der Wurzelrückseite während dem Verschweißen der Aufsatzvorrichtung mit dem Ventilgehäuse ermöglicht werden. Dadurch kann die Oxidation einer dabei entstehenden Schweißnaht vorteilhaft verhindert werden, was die Korrosionsbeständigkeit der Schweißnaht aufrechterhält.

Vorzugsweise ist die Aufsatzvorrichtung dazu vorgesehen, an einem Ventilgehäuse des Stellventils befestigt, insbesondere aufgesetzt, zu werden. Bevorzugt bildet die Aufsatzvorrichtung, insbesondere über den Deckelabschnitt des Grundkörpers, einen Deckel für das Ventilgehäuse aus, der insbesondere dazu vorgesehen ist, die Öffnung des Ventilgehäuses zu verschließen. Vorzugsweise bildet die Aufsatzvorrichtung, insbesondere der Grundkörper, eine Durchführung für ein Ventilglied des Stellventils aus. Bevorzugt ist die Aufsatzvorrichtung in einem an dem Ventilgehäuse montierten Zustand zwischen einem, insbesondere pneumatischen, Antrieb des Stellventils und dem Ventilgehäuse angeordnet. Vorzugsweise ist die Aufsatzvorrichtung dazu vorgesehen, die Durchführung in einem montierten Zustand fluidtechnisch dicht, insbesondere druckdicht zu verschließen. Vorzugsweise begrenzt der Aufnahmefortsatz die Durchführung zumindest im Bereich des Deckelabschnitts.

Die Verbindungswandung ist vorzugsweise im Wesentlichen hohlzylindrisch ausgebildet. Bevorzugt erstreckt sich die Verbindungswandung, insbesondere entlang der Mittelachse betrachtet, vorzugsweise vollständig um den Aufnahmefortsatz. Bevorzugt ist die Ausnehmung entlang der Mittelachse betrachtet von der Verbindungswandung in einer radialen, der Mittelachse zugewandten Richtung, insbesondere von der Verbindungswandung umschlossen, ausgebildet. Insbesondere begrenzt der Aufnahmefortsatz die Ausnehmung zur Mittelachse hin, wobei insbesondere die Verbindungswandung die Ausnehmung in eine der Mittelachse radial abgewandte Richtung begrenzt. Insbesondere ist die Ausnehmung zwischen dem Aufnahmefortsatz und der Verbindungswandung ausgebildet. Die Ausnehmung erstreckt sich, insbesondere senkrecht zur Mittelachse betrachtet, vorzugsweise mindestens bis zu einem der Stirnseite des Grundkörpers zugewandten Ende der Verbindungswandung. Bevorzugt umfasst die Verbindungswandung eine vorgesehene Verbindungsstelle zu einem Verbinden mit dem Ventilgehäuse, wobei die Verbindungsstelle zumindest teilweise an dem der Stirnseite des Grundkörpers zugewandten Ende der Verbindungswandung angeordnet ist.

Bevorzugt weist der Aufnahmefortsatz eine im Wesentlichen röhrenförmige bzw. hohlzylindrische Grundform auf. Vorzugsweise erstreckt sich der Aufnahmefortsatz zumindest von der Stirnseite des Grundkörpers entlang der Mittelachse über eine vollständige Höhe der Ausnehmung, wobei insbesondere sich die Höhe der Ausnehmung parallel zur Mittelachse erstreckt. Insbesondere erstreckt sich eine maximale Höhe der Ausnehmung in einem von dem Ventilgehäuse getrennten Zustand der Aufsatzvorrichtung von dem der Stirnseite des Grundkörpers zugewandten Ende der Verbindungswandung zu einem der Stirnseite des Grundkörpers abgewandten Ende des Aufnahmefortsatzes. Die Stirnseite des Grundkörpers ist eine Außenseite des Grundkörpers, die ein entlang der Mittelachse ausgebildetes Ende des Grundkörpers umfasst. Bevorzugt ist die Aufsatzvorrichtung dazu vorgesehen, bei einem Verbinden mit dem Ventilgehäuse mit der Stirnseite voraus an dem Ventilgehäuse angebracht zu werden, wobei insbesondere die Stirnseite des Grundkörpers bzw. der Aufnahmefortsatz dazu vorgesehen sind/ist, zumindest teilweise in das Ventilgehäuse hinein bewegt zu werden.

Vorzugsweise erstreckt sich die zumindest eine Zirkulationsführung von der Ausnehmung in Richtung der Stirnseite des Grundkörpers, insbesondere teilweise oder vollständig entlang des Aufnahmefortsatzes und/oder durch den Aufnahmefortsatz hindurch. Bevorzugt bildet der Grundkörper, insbesondere der Aufnahmefortsatz, zumindest eine Anlagefläche auf, die dazu vorgesehen ist, bei einem Verbinden mit dem Ventilgehäuse an dem Ventilgehäuse, insbesondere flächig, angelegt zu werden. Besonders bevorzugt ist die zumindest eine Zirkulationsführung beabstandet von der zumindest einen Anlagefläche ausgebildet. Insbesondere ist der Grundkörper, insbesondere der Aufnahmefortsatz, dazu vorgesehen, über ein Anlegen der zumindest einen Anlagefläche ein Durchfluss eines Mediums durch die Öffnung des Ventilgehäuses zumindest im Wesentlichen zu verhindern. Vorzugsweise bildet der Aufnahmefortsatz eine Mehrzahl von Zirkulationsführung aus. Insbesondere ist denkbar, dass der Grundkörper, insbesondere der Aufnahmefortsatz, mehr als eine Anlagefläche ausbilden.

Weiter wird vorgeschlagen, dass die zumindest eine Zirkulationsführung als eine Ausnehmung in einer Außenwand des Aufnahmefortsatzes ausgebildet ist, die sich im Wesentlichen parallel zur Mittelachse erstreckt. Es kann eine vorteilhaft einfache, insbesondere schnelle und kostengünstige, Herstellung der Aufsatzvorrichtung, insbesondere des Aufnahmefortsatzes, ermöglicht werden, insbesondere da die Zirkulationsführung vollständig von außen eingebracht werden kann, vorteilhaft verschieden von einem Einbringen eines Durchgangskanals o.ä.. Zudem kann eine vorteilhaft hohe Wandstärke zwischen der Zirkulationsführung bzw. der Ausnehmung und einer innerhalb des Aufnahmefortsatzes ausgebildeten Aufnahmeöffnung gewährleistet werden. Es kann eine vorteilhaft robuste Ausgestaltung des Aufnahmefortsatzes ermöglicht werden. Insbesondere ist die zumindest eine Zirkulationsführung relativ zu der/den an dem Aufnahmefortsatz ausgebildeten Anlagefläche(n) als eine Vertiefung innerhalb des Aufnahmefortsatzes ausgebildet. Bevorzugt erstreckt sich die zumindest eine Zirkulationsführung im Wesentlichen parallel zur Mittelachse. Vorzugsweise erstreckt sich die zumindest eine Zirkulationsführung im Wesentlichen geradlinig. Alternativ ist denkbar, dass die zumindest eine Zirkulationsführung als eine Durchführung durch den Aufnahmefortsatz ausgebildet ist und/oder gebogen ausgebildet ist. Insbesondere ist denkbar, dass eine als eine Durchführung durch den Aufnahmefortsatz ausgebildete Zirkulationsführung zumindest eine Auslassöffnung umfasst, die an die Ausnehmung grenzt. Insbesondere ist denkbar, dass eine als eine Durchführung durch den Aufnahmefortsatz ausgebildete Zirkulationsführung zumindest eine Einlassöffnung umfasst, die an einer der Mittelachse zugewandten Innenseite des Aufnahmefortsatzes, an einer von der Ausnehmung beabstandet angeordneten, insbesondere von der Mittelachse abgewandten Außenseite des Aufnahmefortsatzes und/oder an einer der Stirnseite zugewandten Endfläche des Aufnahmefortsatzes angeordnet ist.

Des Weiteren wird vorgeschlagen, dass der Grundkörper derart ausgebildet ist, dass die zumindest eine Zirkulationsführung, insbesondere entlang der Mittelachse betrachtet, eine im Wesentlichen runde Querschnittsfläche aufweist. Es können vorteilhafte Strömungseigenschaften für ein Durchspülen der Ausnehmung über die Zirkulationsführung erreicht werden. Es kann eine vorteilhaft einfache, insbesondere schnelle und kostengünstige, Herstellung des Aufnahmefortsatzes ermöglicht werden, insbesondere da die Zirkulationsführung eingefräst/eingebohrt werden kann. Vorzugsweise ist der Grundkörper derart ausgebildet, dass die zumindest eine Zirkulationsführung, insbesondere entlang der Mittelachse betrachtet, eine kreisrunde oder elliptische Querschnittsfläche aufweist. Bevorzugt ist der Grundkörper derart ausgebildet, dass die zumindest eine Zirkulationsführung entlang einer Längserstreckung der Zirkulationsführung, insbesondere parallel zur Mittelachse, eine im Wesentlichen gleichbleibende Querschnittsfläche aufweist. Alternativ ist denkbar, dass die zumindest eine Zirkulationsführung eine sich verändernde Querschnittsfläche aufweist, wobei insbesondere die Querschnittsfläche entlang der Längserstreckung der Zirkulationsführung in Richtung der Ausnehmung kleiner wird oder eine von einer im Wesentlichen runde Querschnittsfläche verschiedene Querschnittsfläche aufweist. Vorzugsweise bildet der Aufnahmefortsatz an einer der Stirnseite zugewandten Außenseite eine Rundung oder eine Fase aus. Es ist denkbar, dass der Aufnahmefortsatz in einem der Stirnseite zugewandten Endbereich der zumindest einen Zirkulationsführung eine Rundung oder eine Fase ausbildet, die sich entlang einer Kontur der Querschnittsfläche der Zirkulationsführung erstreckt.

Zudem wird vorgeschlagen, dass der Aufnahmefortsatz eine im Wesentlichen hohlzylindrische Grundform aufweist, wobei ein um die Mittelachse von einer Innenfläche des Aufnahmefortsatzes ausgebildeter Hohlraum zu einer Aufnahme der Stellstange vorgesehen ist, wobei eine der Mittelachse abgewandte Außenfläche des Aufnahmefortsatzes zumindest teilweise die Ausnehmung begrenzt. Es kann eine vorteilhaft kompakte Ausgestaltung der Aufsatzvorrichtung ermöglicht werden, wobei insbesondere die zumindest eine Zirkulationsführung in einem am Stellventil montierten Zustand der Aufsatzvorrichtung nur teilweise von der Aufsatzvorrichtung selbst begrenzt wird. Vorzugsweise begrenzt eine der Mittelachse abgewandte Außenfläche des Aufnahmefortsatzes, welche die Ausnehmung begrenzt, zumindest teilweise eine Zirkulationsführung. Insbesondere ist denkbar, dass die zumindest eine Zirkulationsführung und die Ausnehmung teilweise ineinander übergehen.

Ferner wird vorgeschlagen, dass der Grundkörper derart ausgebildet ist, dass sich die zumindest eine Zirkulationsführung im Wesentlichen bis zu einem der Stirnseite des Grundkörpers zugewandten Ende des Aufnahmefortsatzes erstreckt. Es können vorteilhafte Strömungseigenschaften für ein Durchspülen der Ausnehmung über die Zirkulationsführung erreicht werden. Es kann eine vorteilhaft einfache, insbesondere schnelle und kostengünstige, Herstellung des Aufnahmefortsatzes ermöglicht werden, insbesondere da die Zirkulationsführung von einer Außenseite der Aufsatzvorrichtung durchgängig in den Grundkörper eingebracht werden kann. Vorzugsweise erstreckt sich die zumindest eine Zirkulationsführung bis zu einem der Stirnseite des Grundkörpers abgewandten Ende des Aufnahmefortsatzes. Insbesondere ist der Grundkörper derart ausgebildet, dass sich die zumindest eine Zirkulationsführung im Wesentlichen vollständig über eine maximale Höhe der zumindest einen Anlagefläche erstreckt, wobei insbesondere die maximale Höhe der Anlagefläche im Wesentlichen parallel zur Mittelachse ausgerichtet ist. Vorzugsweise erstreckt sich die zumindest eine Zirkulationsführung entlang der Mittelachse in Richtung der Stirnseite des Grundkörpers bis zu einer Kante des Aufnahmefortsatzes. Darunter, dass sich die zumindest eine Zirkulationsführung "im Wesentlichen bis zu einem der Stirnseite des Grundkörpers zugewandten Ende des Aufnahmefortsatzes erstreckt" soll insbesondere verstanden werden, dass sich die Zirkulationsführung bis zu einer der Stirnseite zugewandten Unterseite des Aufnahmefortsatzes erstreckt, die eine äußerste Mantelfläche des Aufnahmefortsatzes begrenzt. Es ist denkbar, dass sich der Grundkörper, insbesondere der Aufnahmefortsatz, an der Stirnseite in einem Nahbereich um die Mittelachse noch weiter, insbesondere über die Unterseite hinaus, entlang der Mittelachse erstreckt, insbesondere jedoch in diesem Bereich entlang der Mittelachse betrachtet einen maximalen Außendurchmesser aufweisen, wie die äußerste Mantelfläche.

Des Weiteren wird vorgeschlagen, dass der Grundkörper derart ausgebildet ist, dass sich die zumindest eine Zirkulationsführung parallel zur Mittelachse mindestens über einen Großteil einer maximalen Höhe der Ausnehmung erstreckt. Es können vorteilhafte Strömungseigenschaften für ein Durchspülen der Ausnehmung über die Zirkulationsführung erreicht werden. Es kann eine vorteilhaft einfache, insbesondere schnelle und kostengünstige, Herstellung des Aufnahmefortsatzes ermöglicht werden, insbesondere da die Zirkulationsführung durchgehend bis in die Ausnehmung hinein ausgebildet werden kann. Vorzugsweise erstreckt sich die zumindest eine Zirkulationsführung parallel zur Mittelachse über mindestens 70%, vorzugsweise mindestens 80% und besonders bevorzugt mindestens 90%, der maximalen Höhe der Ausnehmung. Bevorzugt erstreckt sich die zumindest eine Zirkulationsführung parallel zur Mittelachse vollständig über die maximale Höhe der Ausnehmung, insbesondere bis zu einem der Stirnseite abgewandten Ende des Aufnahmefortsatzes. Insbesondere ist die Verbindungswandung an dem der Stirnseite abgewandten Ende des Aufnahmefortsatzes mit dem Aufnahmefortsatz verbunden bzw. geht in diesen über. Insbesondere ist der Grundkörper einteilig ausgebildet. Insbesondere weist der Aufnahmefortsatz zumindest eine Begrenzungsfläche auf, welche die Ausnehmung zumindest teilweise begrenzt und beabstandet von der zumindest einen Zirkulationsführung ausgebildet ist, wobei vorzugsweise ein minimaler radialer Abstand der Begrenzungsfläche zur Mittelachse größer ist als ein minimaler radialer Abstand einer die Zirkulationsführung begrenzenden Außenfläche des Aufnahmefortsatzes zur Mittelachse.

Zudem wird vorgeschlagen, dass der Aufnahmefortsatz eine Mehrzahl von Zirkulationsführungen ausbildet, die insbesondere im Wesentlichen baugleich ausgebildet sind, wobei die Zirkulationsführungen entlang der Mittelachse betrachtet um die Mittelachse verteilt angeordnet sind. Es können vorteilhafte Strömungseigenschaften für ein Durchspülen der Ausnehmung über die Zirkulationsführung erreicht werden. Insbesondere kann bei einem Betrieb des Stellventils mit der Aufsatzvorrichtung eine gleichmäßige Umspülung innerhalb der Ausnehmung erreicht werden. Vorzugsweise können ungewollte Verwirbelungen und/oder störende Fluidströmungen bei einer Verwendung innerhalb des Stellventils vorteilhaft verhindert werden. Vorzugsweise bildet der Aufnahmefortsatz mindestens vier, vorzugsweise mindestens sechs und besonders bevorzugt mindestens acht, Zirkulationsführungen aus. Bevorzugt sind die Zirkulationsführungen entlang der Mittelachse betrachtet im Wesentlichen gleichmäßig um die Mittelachse verteilt angeordnet, insbesondere in einem im Wesentlichen gleichbleibenden Winkelversatz zueinander um die Mittelachse. Insbesondere in einer Ausgestaltung, bei der die Zirkulationsführungen in einer Außenfläche des Aufnahmefortsatzes eingebracht sind, beträgt eine gemeinsame maximale Breite der Zirkulationsführungen entlang einer Umlaufrichtung um die Mittelachse betrachtet höchstens 40%, vorzugsweise höchstens 50% und besonders bevorzugt höchstens 60%, eines maximalen Außenumfangs des Aufnahmefortsatzes.

Außerdem wird ein Stellventil für eine prozesstechnische Anlage, mit einem Ventilgehäuse, das eine Drosselstelle ausbildet, mit einer Stellstange, wobei das Ventilgehäuse eine Öffnung ausbildet, durch die die Stellstange bewegbar ist, und mit einer erfindungsgemäßen Aufsatzvorrichtung vorgeschlagen, wobei die Aufsatzvorrichtung über eine Verbindungswandung der Aufsatzvorrichtung stoffschlüssig mit dem Ventilgehäuse verbunden ist, wobei zumindest eine Zirkulationsführung der Aufsatzvorrichtung eine Fluidkammer des Ventilgehäuses fluidtechnisch mit einer an der Verbindungswandung ausgebildeten Ausnehmung verbindet.

Durch eine erfindungsgemäße Ausgestaltung des Stellventils können abgetrennte Toträume innerhalb des Stellventils vorteilhaft verhindert werden. Die zu einem Verschweißen vorteilhaft ausgebildete Ausnehmung innen an der Verbindungswandung kann durch die zumindest eine Zirkulationsführung fluidtechnisch mit der Fluidkammer des Ventilgehäuses verbunden werden. Dadurch kann ein Durchspülen der Ausnehmung bei einem Durchströmen des Stellventils durch ein Fluid ermöglicht werden. Durch die Ausnehmung und die die Ausnehmung verbindenden Zirkulationsführung kann eine Formierung der Wurzelrückseite während dem Verschweißen der Aufsatzvorrichtung mit dem Ventilgehäuse ermöglicht werden. Dadurch kann die Oxidation einer dabei entstehenden Schweißnaht vorteilhaft verhindert werden, was die Korrosionsbeständigkeit der Schweißnaht aufrechterhält.

Das Ventilgehäuse ist vorzugsweise ein insbesondere einstückiger Körper, der bevorzugt aus einem oder mehreren Medien- und/oder temperaturbeständigen Materialien gefertigt ist. Beispielsweise kann das Ventilgehäuse ein einstückiger Metall-Gusskörper oder Schmiedekörper sein, der abschnittsweise mit einer bearbeiteten, beispielsweise polierten und/oder beschichteten, beispielsweise lackiert, pulverbeschichtet, verchromt, emailliert, galvanisiert oder dergleichen, Oberfläche versehen ist. Das Ventilgehäuse bildet zumindest eine Fluidkammer aus, die als Innenraum des Ventilgehäuses ausgebildet ist. Die Fluidkammer erstreckt sich insbesondere durch die Drosselstelle hindurch. Die Fluidkammer des Ventilgehäuses ist vorzugsweise ausschließlich durch einen Prozessfluideingang, wie eine Einlassöffnung, einen Prozessfluidausgang, wie eine Auslassöffnung, und die, insbesondere zuvor genannte, Öffnung nach außen geöffnet. Es ist jedoch denkbar, dass das Ventilgehäuse weitere Öffnungen zu der Fluidkammer oder einem anderen Innenraum des Ventilgehäuses aufweist, beispielsweise Öffnungen zum Einführen von Sensorik oder einen oder mehrere weitere Prozessfluid-Ein- oder Ausgänge.

Das Stellventil umfasst insbesondere den Antrieb, welcher über die Aufsatzvorrichtung an dem Ventilgehäuse befestigt bzw. befestigbar ist. Bevorzugt ist der Antrieb über die Aufsatzvorrichtung und zusätzliche weitere Bauteile, wie beispielsweise ein Joch, mit dem Ventilgehäuse verbunden. Vorzugsweise umfasst das Stellventil zumindest ein Dichtelement, beispielsweise einen Balg und zusätzliche Dichtungsringe o.dgl., zu einem Abdichten der Durchführung innerhalb der Aufsatzvorrichtung oder einem weiteren Aufsatzbauteil in Richtung des Antriebs hin. Bevorzugt ist die Aufsatzvorrichtung ist über die Verbindungswandung stoffschlüssig mit dem Ventilgehäuse verbunden, insbesondere mit dem Ventilgehäuse verscheißt. Vorzugsweise bildet das Ventilgehäuse eine Verbindungswandung aus, die korrespondierend zur Verbindungswandung der Aufsatzvorrichtung ausgebildet ist. Insbesondere sind die Verbindungswandungen in einem montierten Zustand stoffschlüssig miteinander verbunden, insbesondere miteinander verscheißt. Die Verbindungswandung des Ventilgehäuses erstreckt sich vorzugsweise um die Öffnung des Ventilgehäuses an einer Außenseite des Ventilgehäuses, insbesondere in eine der Fluidkammer abgewandte Richtung. Bevorzugt ist die Verbindungswandung des Ventilgehäuses im Wesentlichen hohlzylindrisch ausgebildet. Insbesondere weisen/weist die Öffnung des Ventilgehäuses und/oder die Verbindungswandung des Ventilgehäuses einen maximalen Innendurchmesser auf, der größer ist als der maximale Außendurchmesser des Aufnahmefortsatzes der Aufsatzvorrichtung. Die zumindest eine Zirkulationsführung erstreckt sich vorzugsweise von der Fluidkammer bis zur Ausnehmung bzw. in die Ausnehmung hinein. Insbesondere erstreckt sich die zumindest eine Zirkulationsführung durch die Öffnung des Ventilgehäuses hindurch. Vorzugsweise ist die Ausnehmung in einem Verbindungsbereich der Aufsatzvorrichtung und des Ventilgehäuses, insbesondere relativ zur Mittelachse der Aufsatzvorrichtung auf Höhe der Verbindungsstelle, angeordnet. Bevorzugt ist die Ausnehmung zumindest teilweise von der Verbindungswandung des Ventilgehäuses begrenzt.

Des Weiteren wird vorgeschlagen, dass die Fluidkammer über die zumindest eine Zirkulationsführung durch die Öffnung des Ventilgehäuses fluidtechnisch mit der durch die Aufsatzvorrichtung an der Verbindungswandung ausgebildeten Ausnehmung verbunden ist, wobei die Ausnehmung von der Verbindungswandung, einer Wandung des Ventilgehäuses, insbesondere der Verbindungswandung des Ventilgehäuses, und einem Aufnahmefortsatz der Aufsatzvorrichtung begrenzt ist. Es kann eine vorteilhaft kompakte Ausgestaltung ermöglicht werden, insbesondere da das Ventilgehäuse die Zirkulationsführung und die Ausnehmung mit begrenzt. Insbesondere ist das Ventilgehäuse derart ausgebildet, dass bei einem Durchströmen der Drosselstelle durch ein Medium in die Fluidkammer strömendes Medium zumindest teilweise durch die Zirkulationsführungen in die Ausnehmung gelangt. Insbesondere ist zwischen der Drosselstelle und einer Eintrittsöffnung der Zirkulationsführung innerhalb der Fluidkammer ein strömungstechnisch im Wesentlichen ungehinderter Strömungsweg für das Medium ausgebildet, welcher insbesondere im Wesentlichen frei von Hindernissen ist.

Zudem wird vorgeschlagen, dass das Stellventil eine Verbindungsstelle, insbesondere eine Schweißnaht, zur stoffschlüssigen Verbindung der Aufsatzvorrichtung und des Ventilgehäuses umfasst, wobei die Verbindungsstelle an einer der Ausnehmung abgewandten Außenseite der Verbindungswandung angeordnet ist. Es kann ein vorteilhaft einfaches und schnelles Verbinden der Aufsatzvorrichtung mit dem Ventilgehäuse erreicht werden, insbesondere da die Verbindungsstelle von außen vorteilhaft zugänglich ausgebildet ist. Es ist eine Verbindung ohne spezielle Werkzeuge zum Halten oder Ausrichten des Ventilgehäuses bzw. der Aufsatzvorrichtung ermöglicht. Eine Verbindung des Ventilgehäuses und der Aufsatzvorrichtung kann vorteilhaft direkt an einem Einsatzort innerhalb der Prozessanlage erfolgen. Insbesondere ist die Verbindungsstelle an den aneinander anliegenden Außenkanten der Verbindungswandungen der Aufsatzvorrichtung und des Ventilgehäuses angeordnet. Besonders bevorzugt ist die Verbindungsstelle senkrecht zu der Mittelachse der Aufsatzvorrichtung betrachtet beabstandet von der Öffnung des Ventilgehäuses bzw. einer Außenwand des Ventilgehäuses angeordnet. Besonders bevorzugt ist die Verbindungswandung des Ventilgehäuses derart ausgebildet, dass ein maximaler Innendurchmesser der Verbindungswandung des Ventilgehäuses im Wesentlichen gleich groß ist wie ein maximaler Innendurchmesser der Verbindungswandung der Aufsatzvorrichtung. Besonders bevorzugt ist die Verbindungswandung des Ventilgehäuses derart ausgebildet, dass ein maximaler Innendurchmesser der Verbindungswandung des Ventilgehäuses größer ist wie ein minimaler Innendurchmesser der Öffnung des Ventilgehäuses.

Die erfindungsgemäße Aufsatzvorrichtung und/oder das erfindungsgemäße Stellventil sollen/soll hierbei nicht auf die oben beschriebene Anwendung und Ausführungsform beschränkt sein. Insbesondere können/kann die erfindungsgemäße Aufsatzvorrichtung und/oder das erfindungsgemäße Stellventil zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Figur 1.:: eine perspektivische Außenansicht eines erfindungsgemäßen Stellventils mit einer erfindungsgemäßen Aufsatzvorrichtung, die stoffschlüssig mit einem Ventilgehäuse des Stellventils verbunden ist,
- Figur 2.:: eine schematische Schnittansicht des erfindungsgemäßen Stellventils im Bereich der erfindungsgemäßen Aufsatzvorrichtung,
- Figur 3.:: eine perspektivische Ansicht der erfindungsgemäßen Aufsatzvorrichtung in einem von dem Ventilgehäuse getrennten Zustand und
- Figur 4.:: eine schematische Schnittansicht des erfindungsgemäßen Stellventils mit der erfindungsgemäßen Aufsatzvorrichtung in einem Verbindungsbereich der Aufsatzvorrichtung und des Ventilgehäuses.

### Beschreibung der Ausführungsbeispiele

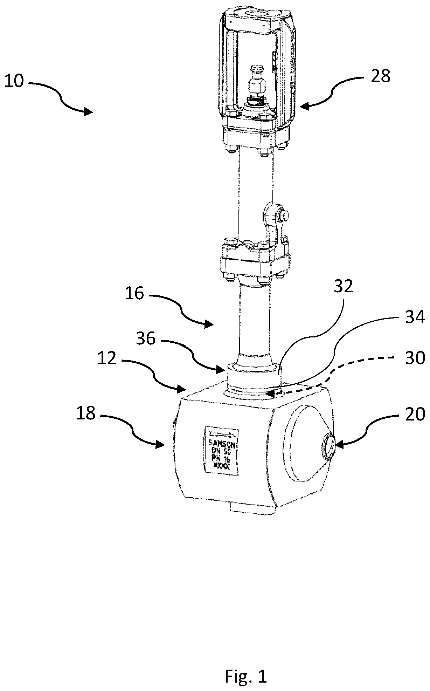

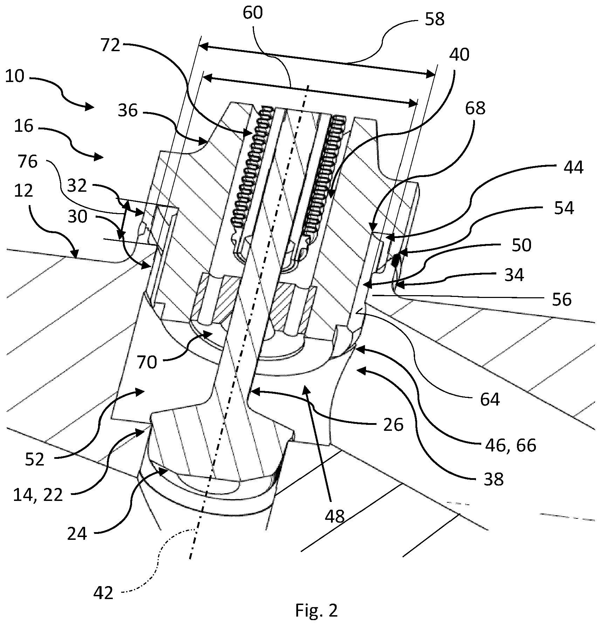

In Figur 1 ist ein Stellventil 10 für eine Prozessanlage, wie beispielsweise eine Chemieanlage, ein Kraftwerk, eine Lebensmittel verarbeitende Anlage oder dergleichen, gezeigt. Das Stellventil 10 umfasst ein Ventilgehäuse 12, das eine Drosselstelle 14 ausbildet (siehe Figur 2), und eine Aufsatzvorrichtung 16, die an dem Ventilgehäuse 12 befestigt ist. Die Aufsatzvorrichtung 16 bildet einen Gehäusedeckel für das Ventilgehäuse 12 aus. Das Ventilgehäuse 12 hat eine Einlassöffnung 18 und eine Auslassöffnung 20, wobei die Drosselstelle 14 im Wesentlichen zwischen der Einlassöffnung 18 und der Auslassöffnung 20 angeordnet ist. Auch weist das Stellventil 10 einen Ventilsitz 22 auf (siehe Figur 2), der die Drosselstelle 14 umgibt. Das Stellventil 10 umfasst ein Ventilglied 24 und eine Stellstange 26 (siehe Figur 2), die dazu vorgesehen ist, das Ventilglied 24 mit einem Antrieb des Stellventils 10 (in Figuren nicht gezeigt) zu verbinden. Insbesondere ist der Antrieb dazu vorgesehen, das Ventilglied 24 angetrieben zu bewegen, um die Drosselstelle 14 des Ventilgehäuses 12 bzw. des Stellventils 10 freizugeben oder zu verschließen. Die Aufsatzvorrichtung 16 bildet eine Durchgangsöffnung für die Stellstange 26 aus. Die Aufsatzvorrichtung 16 ist gegenüber bzw. oberhalb der Drosselstelle 14 angeordnet. Das Ventilglied 24 ist über die Stellstange 26 bzw. den Antrieb entlang einer Hubachse translatorisch beweglich. Das Ventilglied 24 ist bevorzugt als ein Hubventilglied, beispielsweise ein Ventilkolben oder Ventilkegel, ausgebildet. Das Ventilglied ist eingerichtet zum Einstellen einer Prozessfluidströmung der prozesstechnischen Anlage durch das Stellventil 10. Erfindungsgemäß ist das Stellventil 10 mit einer Einsatzanordnung zum Führen des Ventilglieds 24 ausgestattet.

Das Ventilgehäuse 12 und die Aufsatzvorrichtung 16 sind stoffschlüssig miteinander verbunden, insbesondere miteinander verschweißt. Das Stellventil 10 umfasst zudem weitere Aufsatzbauteile, die an der Aufsatzvorrichtung 16 befestigt sind. Die Aufsatzvorrichtung 16 ist zwischen dem Ventilgehäuse 12 und dem Antrieb angeordnet. Das Stellventil 10 umfasst ein als Joch 28 ausgebildetes Trägerbauteil, welches an der Aufsatzvorrichtung 16 angeordnet ist und zu einem Tragen von verschiedenen Anbaugeräten, wie beispielsweise einem Stellungsregler, geeignet ist. Vorzugsweise ist die Aufsatzvorrichtung 16 zwischen dem Ventilgehäuse 12 und dem als Joch 28 ausgebildeten Trägerbauteil angeordnet. Das in Figur 1 gezeigte Stellventil 10 ist besonders zu einer Verwendung mit Medien bei relativ hohen oder relativ niedrigen Temperaturen, beispielsweise im, Cryo-Bereich oder bei mehr als 200-300°C, wie bei Anwendungen mit flüssigem Lithium, geeignet, wobei ein Abstand zwischen dem das jeweilige Medium führenden Ventilgehäuse 12 und dem Antrieb durch die Aufsatzvorrichtung 16, das Joch 28 und/oder andere Aufsatzbauteile relativ groß gehalten werden kann.

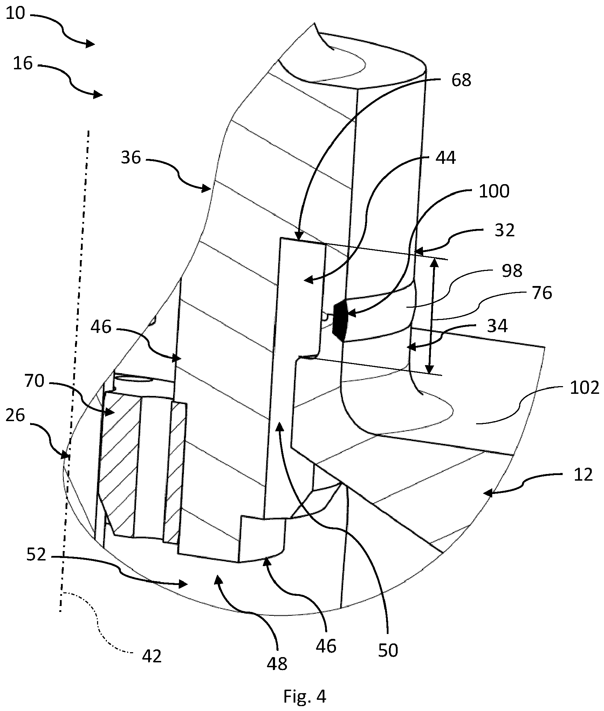

Das Ventilgehäuse 12 bildet eine Öffnung 30 aus (siehe Figur 2), durch die die Stellstange 26 bewegbar ist, wobei insbesondere die Aufsatzvorrichtung 16 dazu vorgesehen ist, die Öffnung 30 im Wesentlichen vollständig, insbesondere mit Ausnahme einer Durchführung für die Stellstange 26, zu verdecken. Die Öffnung 30 des Ventilgehäuses 12 wird in einem montierten Zustand im Wesentlichen vollständig von der Aufsatzvorrichtung 16 verdeckt. Die Aufsatzvorrichtung 16 ist über eine Verbindungswandung 32 der Aufsatzvorrichtung 16 stoffschlüssig mit dem Ventilgehäuse 12, insbesondere einer Verbindungswandung 34 des Ventilgehäuses 12, verbunden (siehe auch Figur 4).

In Figur 2 ist eine Schnittansicht des Stellventils 10 im Bereich der Aufsatzvorrichtung 16 gezeigt. Die Aufsatzvorrichtung 16 umfasst einen Grundkörper 36, der einen Deckelabschnitt 38 umfasst, wobei der Deckelabschnitt 38 dazu vorgesehen ist, die Öffnung 30 des Ventilgehäuses 12 des Stellventils 10 zu verschließen. Die Aufsatzvorrichtung 16 ist dazu vorgesehen, bei einer Verbindung mit dem Ventilgehäuse 12 zumindest teilweise in das Ventilgehäuse 12 hinein geschoben zu werden. Das Ventilglied 24 ist zu einem Verschließen der Drosselstelle 14, insbesondere über den Antrieb und die Stellstange 26, in einen abdichtenden Eingriff mit dem Ventilsitz 22 bringbar. Der Ventilsitz 22 und das Ventilglied 24 sind für einen abdichtenden Eingriff aufeinander abgestimmt. Die Aufsatzvorrichtung 16 ist dazu vorgesehen, an dem Ventilgehäuse 12 des Stellventils 10 befestigt, insbesondere aufgesetzt, zu werden. Vorzugsweise bildet die Aufsatzvorrichtung 16, insbesondere der Grundkörper 36, eine Durchführung 40 für das Ventilglied 24 des Stellventils 10 aus. Die Aufsatzvorrichtung 16 ist in einem an dem Ventilgehäuse 12 montierten Zustand zwischen dem Antrieb des Stellventils 10 und dem Ventilgehäuse 12 angeordnet. Vorzugsweise ist die Aufsatzvorrichtung 16 dazu vorgesehen, die Durchführung 40 in einem montierten Zustand fluidtechnisch dicht, insbesondere druckdicht zu verschließen.

Der Grundkörper 36 weist eine Mittelachse 42 auf, die sich durch den Deckelabschnitt 38 erstreckt. Die Mittelachse 42 des Grundkörpers 36 bzw. eine Mittelachse der Aufsatzvorrichtung 16, insbesondere des Deckelabschnitts 38 und/oder der Verbindungswandung 32 der Aufsatzvorrichtung 16, sind/ist im Wesentlichen parallel zur Hubachse des Stellventils 10 ausgerichtet. In der in den Figuren gezeigten Ausgestaltung entspricht die Mittelachse 42 des Grundkörpers 36 und/oder die Mittelachse der Aufsatzvorrichtung 16, insbesondere des Deckelabschnitts 38 und/oder der Verbindungswandung 32 der Aufsatzvorrichtung 16, im Wesentlichen der Hubachse des Stellventils 10. Der Grundkörper 36 bildet die Verbindungswandung 32 der Aufsatzvorrichtung 16 aus, die als Teil des Deckelabschnitts 38 ausgebildet ist und dazu vorgesehen ist, stoffschlüssig mit dem Ventilgehäuse 12, insbesondere der Verbindungswandung 34 des Ventilgehäuses 12, verbunden zu werden. Die Verbindungswandungen 32, 34 erstrecken sich jeweils entlang der Mittelachse 42 betrachtet im Wesentlichen vollständig um die Mittelachse 42. Die Verbindungswandungen 32, 34 sind jeweils, insbesondere entlang der Mittelachse 42 betrachtet, ringförmig ausgebildet. Die Verbindungswandungen 32, 34 sind jeweils im Wesentlichen hohlzylindrisch ausgebildet.

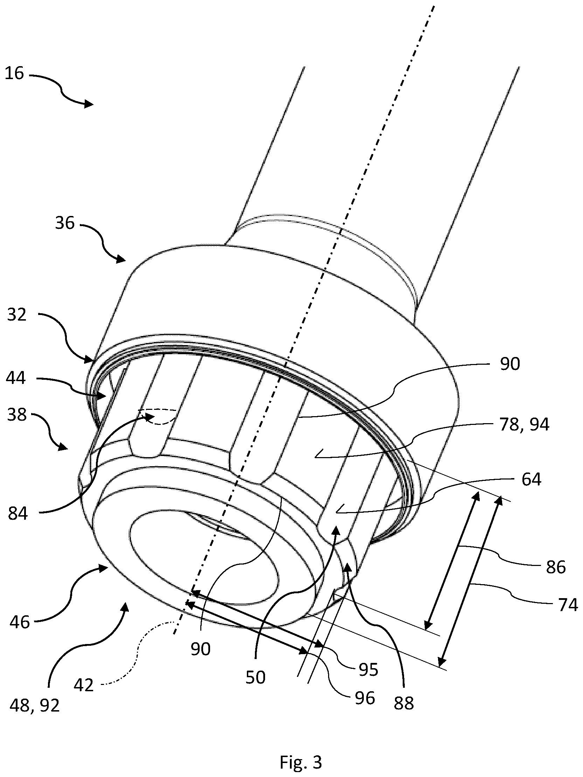

Der Grundkörper 36 begrenzt über die Verbindungswandung 32 am Deckelabschnitt 38 zur Mittelachse 42 hin eine Ausnehmung 44. Die Aufsatzvorrichtung 16 umfasst einen Aufnahmefortsatz 46, der zu einer Aufnahme der Stellstange 26 des Stellventils 10 vorgesehen ist und sich am Deckelabschnitt 38 zu einer Stirnseite 48 des Grundkörpers 36 hin erstreckt. Vorzugsweise begrenzt der Aufnahmefortsatz 46 die Durchführung 40 zumindest im Bereich des Deckelabschnitts 38 nach außen hin. Der Aufnahmefortsatz 46 ist einstückig mit dem Grundkörper 36 ausgebildet. Der Aufnahmefortsatz 46 ist von der Stirnseite 48 aus entlang der Mittelachse 42 betrachtet zumindest teilweise vor der Verbindungswandung 32 angeordnet und begrenzt die Ausnehmung 44 über eine Außenseite des Aufnahmefortsatzes 46. Der Aufnahmefortsatz 46 bildet eine Mehrzahl von Zirkulationsführungen 50 aus, die dazu vorgesehen sind, in einem mit dem Ventilgehäuse 12 verbundenen Zustand eine Fluidkammer 52 des Ventilgehäuses 12 fluidtechnisch mit der Ausnehmung 44 zu verbinden. Die Zirkulationsführungen 50 sind im Wesentlichen baugleich ausgebildet. Die Zirkulationsführungen 50 sind entlang der Mittelachse 42 betrachtet im Wesentlichen gleichmäßig um die Mittelachse 42 verteilt angeordnet (siehe auch Figur 3).

Die Verbindungswandung 32 der Aufsatzvorrichtung 16 erstreckt sich entlang der Mittelachse 42 betrachtet vollständig um den Aufnahmefortsatz 46. Die Ausnehmung 44 ist entlang der Mittelachse 42 betrachtet von der Verbindungswandung 32 der Aufsatzvorrichtung 16 in einer radialen, der Mittelachse 42 zugewandten Richtung, insbesondere von der Verbindungswandung 32 der Aufsatzvorrichtung 16 umschlossen, ausgebildet. Der Aufnahmefortsatz 46 begrenzt die Ausnehmung 44 zur Mittelachse 42 hin, wobei die Verbindungswandung 32 der Aufsatzvorrichtung 16 die Ausnehmung 44 in eine der Mittelachse 42 radial abgewandte Richtung begrenzt. Die Ausnehmung 44 ist zwischen dem Aufnahmefortsatz 46 und der Verbindungswandung 32 der Aufsatzvorrichtung 16 ausgebildet. Die Ausnehmung 44 erstreckt sich, insbesondere senkrecht zur Mittelachse 42 betrachtet, über ein der Stirnseite 48 des Grundkörpers 36 zugewandtes Ende 54 der Verbindungswandung 32 der Aufsatzvorrichtung 16 hinaus bis zu einer die Öffnung 30 des Ventilgehäuses 12 begrenzenden Innenwand 56 des Ventilgehäuses 12.

Die Fluidkammer 52 ist über die Zirkulationsführungen 50 durch die Öffnung 30 des Ventilgehäuses 12 fluidtechnisch mit der durch die Aufsatzvorrichtung 16 an der Verbindungswandung 32 ausgebildeten Ausnehmung 44 verbunden, wobei die Ausnehmung 44 von der Verbindungswandung 32 der Aufsatzvorrichtung 16, der Verbindungswandung 34 des Ventilgehäuses 12 und dem Aufnahmefortsatz 46 der Aufsatzvorrichtung 16 begrenzt ist. Die Zirkulationsführungen 50 sind zumindest in einem Bereich zwischen der Fluidkammer 52 und der Ausnehmung 44 nach außen von dem Ventilgehäuse 12, insbesondere der die Öffnung 30 des Ventilgehäuses 12 ausbildenden Innenwand 56 des Ventilgehäuses 12, begrenzt. Bevorzugt weist die Verbindungswandung 34 des Ventilgehäuses 12 senkrecht zur Mittelachse 42 einen im Wesentlichen identischen mittleren Innendurchmesser 58 auf, wie die Verbindungswandung 32 der Aufsatzvorrichtung 16. Vorzugsweise ist der mittlere und/oder ein minimaler Innendurchmesser 58 der Verbindungswandung 34 des Ventilgehäuses 12 größer als ein mittlerer und/oder maximaler Innendurchmesser 60 der Innenwand 56 des Ventilgehäuses 12, welche eine/die Zirkulationsführung(en) 50 zumindest teilweise begrenzt.

Der Aufnahmefortsatz 46 weist eine im Wesentlichen hohlzylindrische Grundform auf, wobei ein um die Mittelachse 42 von einer Innenfläche des Aufnahmefortsatzes 46 ausgebildeter Hohlraum zu einer Aufnahme der Stellstange 26 vorgesehen ist, wobei eine der Mittelachse 42 abgewandte Außenfläche des Aufnahmefortsatzes 46 zumindest teilweise die Ausnehmung 44 begrenzt. Der Aufnahmefortsatz 46 bildet mehrere Führungsflächen 64 aus, die jeweils eine der Zirkulationsführungen 50 begrenzen. Die Führungsflächen 64 sind jeweils an einer der Mittelachse 42 abgewandten Außenseite des Aufnahmefortsatzes 46 angeordnet. Die Führungsflächen 64 erstrecken sich vorzugsweise jeweils bis in die Ausnehmung 44 hinein bzw. begrenzen diese zumindest teilweise.

Der Grundkörper 36 ist derart ausgebildet, dass sich die Zirkulationsführungen 50 jeweils im Wesentlichen bis zu einem der Stirnseite 48 des Grundkörpers 36 zugewandten Ende 66 des Aufnahmefortsatzes 46 erstrecken. Die Zirkulationsführungen 50 erstrecken sich jeweils im Wesentlichen über eine gesamte Länge des Aufnahmefortsatzes 46, insbesondere von dem der Stirnseite 48 der Aufsatzvorrichtung 16 zugewandten Ende 66 des Aufnahmefortsatzes 46 bis zu einem der Stirnseite 48 abgewandten Ende 68 des Aufnahmefortsatzes 46, welches insbesondere entlang der Mittelachse 42 auf einer Höhe mit einem Ende der Ausnehmung 44 und einem Ende der Verbindungswandung 32 der Aufsatzvorrichtung 16 ausgebildet ist. Der Grundkörper 36 ist im Wesentlichen einteilig ausgebildet, wobei insbesondere der Aufnahmefortsatz 46 und die Verbindungswandung 32 zusammen einstückig ausgebildet sind, insbesondere als Teil eines Gussteils oder über eine stoffschlüssige Verbindung. Alternativ ist aber auch denkbar, dass die einzelnen Teile der Aufsatzvorrichtung 16, insbesondere der Aufnahmefortsatz 46 und die Verbindungswandung 32, über eine kraft- und/oder formschlüssige Verbindung miteinander verbunden bzw. verbindbar sind.

Das Stellventil 10 umfasst ein Einlegeteil 70, welches zu einem Führen der Stellstange 26 vorgesehen ist. Das Einlegeteil 70 ist an dem Aufnahmeaufsatz der Aufsatzvorrichtung 16 angeordnet, insbesondere befestigt. Das Einlegeteil 70 bildet mehrere Fluidkanäle aus, um die Fluidkammer 52 des Ventilgehäuses 12 mit der Durchführung 40 innerhalb der Aufsatzvorrichtung 16 zu verbinden. Die Stellstange 26 und das Ventilglied 24 sind einteilig ausgebildet. Es sind jedoch auch andere Ausgestaltungen des Ventilglieds 24 denkbar. Das Stellventil 10 umfasst eine Dichtungseinheit zu einem Abdichten der Fluidkammer 52 und der damit verbundenen Innenräume zum Antrieb hin. Die Dichtungseinheit umfasst einen Dichtbalg 72, der an einem oberen Ende mit dem Grundkörper 36 der Aufsatzvorrichtung 16 oder einem anderen Aufsatzbauteil des Stellventils 10 verbunden ist (in Figuren nicht gezeigt) und an einem unteren Ende mit der Stellstange 26 verbunden ist. Vorzugsweise ist der Dichtbalg 72 stoffschlüssig mit dem Grundkörper 36 oder dem anderen Aufsatzbauteil des Stellventils 10 verbunden. Bevorzugt ist der Dichtbalg 72 über eine Pressverbindung oder über eine stoffschlüssige Verbindung mit der Stellstange 26 verbunden.

In Figur 3 ist eine perspektivische Ansicht der Aufsatzvorrichtung 16 in einem von dem Ventilgehäuse 12 getrennten Zustand gezeigt. Die Zirkulationsführungen 50 sind jeweils als eine Ausnehmung in einer Außenwand des Aufnahmefortsatzes 46 ausgebildet, die sich im Wesentlichen parallel zur Mittelachse 42 erstreckt. Die Zirkulationsführungen 50 sind jeweils durch eine der Führungsflächen 64 des Aufnahmefortsatzes 46 begrenzt. Die Führungsflächen 64 sind jeweils gebogen ausgebildet. Insbesondere bilden die Führungsflächen 64 die Zirkulationsführungen 50 jeweils als eine Rinne aus, die sich im Wesentlichen geradlinig und im Wesentlichen parallel zur Mittelachse 42 entlang einer Höhenerstreckung des Aufnahmefortsatzes 46 erstreckt. Vorzugsweise erstrecken sich die Zirkulationsführungen 50 jeweils über eine gesamte Höhe 74 des Aufnahmefortsatzes 46.

Der Aufnahmefortsatz 46 weist eine im Wesentlichen röhrenförmige bzw. hohlzylindrische Grundform auf. Der Aufnahmefortsatz 46 erstreckt sich von der Stirnseite 48 des Grundkörpers 36 entlang der Mittelachse 42 über eine vollständige Höhe 76 der Ausnehmung 44 (siehe auch Figur 2). Insbesondere erstreckt sich die maximale Höhe der Ausnehmung 44 in einem von dem Ventilgehäuse 12 getrennten Zustand der Aufsatzvorrichtung 16 (wie in Figur 3 gezeigt) von dem der Stirnseite 48 des Grundkörpers 36 zugewandten Ende der Verbindungswandung 32 der Aufsatzvorrichtung 16 zu einem der Stirnseite 48 des Grundkörpers 36 abgewandten Ende des Aufnahmefortsatzes 46. Die Stirnseite 48 des Grundkörpers 36 ist eine Außenseite des Grundkörpers 36, die ein entlang der Mittelachse 42 ausgebildetes Ende des Grundkörpers 36 umfasst. Bevorzugt ist die Aufsatzvorrichtung 16 dazu vorgesehen, bei einem Verbinden mit dem Ventilgehäuse 12 mit der Stirnseite 48 voraus an dem Ventilgehäuse 12 angebracht zu werden, wobei insbesondere die Stirnseite 48 des Grundkörpers 36 bzw. der Aufnahmefortsatz 46 dazu vorgesehen sind/ist, zumindest teilweise in das Ventilgehäuse 12 hinein bewegt zu werden.

Der Aufnahmefortsatz 46 bildet mehrere Anlageflächen 78 aus, die insbesondere jeweils an der der Mittelachse 42 abgewandten Außenseite des Aufnahmefortsatzes 46 angeordnet sind. Jede der Anlageflächen 78 grenzt jeweils an zwei der Führungsflächen 64 an. Insbesondere grenzt jede der Führungsflächen 64 jeweils an zwei der Anlageflächen 78 an. Die Anlageflächen 78 sind entlang der Mittelachse 42 betrachtet, vorzugsweise im Wesentlichen gleichmäßig, um die Mittelachse 42 verteilt angeordnet. Die Führungsflächen 64 sind entlang der Mittelachse 42 betrachtet, vorzugsweise im Wesentlichen gleichmäßig, um die Mittelachse 42 verteilt angeordnet. Insbesondere sind auch Ausgestaltungen denkbar, wobei die Aufsatzvorrichtung 16 lediglich eine Zirkulationsführung 50 umfasst. Vorzugsweise grenzen die Anlageflächen 78 und die Führungsflächen 64 über eine Kante 80 aneinander an. Alternativ ist denkbar, dass zwischen den Führungsflächen 64 und den Anlageflächen 78 jeweils eine Fase angeordnet ist oder dass die Führungsflächen 64 und die Anlageflächen 78 ineinander übergehen, wobei insbesondere eine Außenfläche des Aufnahmefortsatzes 46 stetig und gebogen ausgebildet ist.

Die Zirkulationsführungen 50 sind relativ zu den Anlageflächen 78 jeweils als eine Vertiefung innerhalb des Aufnahmefortsatzes 46 ausgebildet. Die Zirkulationsführungen 50 erstrecken sich jeweils im Wesentlichen parallel zur Mittelachse 42. Die Zirkulationsführungen 50 sind jeweils im Wesentlichen geradlinig ausgebildet. Alternativ ist denkbar, dass die Zirkulationsführungen 50 als Durchführungen durch den Aufnahmefortsatz 46, beispielsweise als Fluidkanäle, und/oder gebogen ausgebildet sind (in Figuren nicht gezeigt). Insbesondere ist denkbar, dass als Durchführung durch den Aufnahmefortsatz 46 ausgebildete Zirkulationsführungen 50 jeweils zumindest eine Auslassöffnung umfassen, die an die Ausnehmung 44 grenzt. Insbesondere ist denkbar, dass als Durchführung durch den Aufnahmefortsatz 46 ausgebildete Zirkulationsführungen 50 zumindest eine Einlassöffnung umfassen, die an einer der Mittelachse 42 zugewandten Innenseite des Aufnahmefortsatzes 46, an einer von der Ausnehmung 44 beabstandet angeordneten, insbesondere von der Mittelachse 42 abgewandten Außenseite des Aufnahmefortsatzes 46 und/oder an einer der Stirnseite 48 zugewandten Endfläche des Aufnahmefortsatzes 46 angeordnet ist.

Der Grundkörper 36 bzw. der Aufnahmefortsatz 46, insbesondere die Führungsflächen 64, sind/ist derart ausgebildet, dass die Zirkulationsführungen 50, insbesondere entlang der Mittelachse 42 betrachtet, jeweils eine im Wesentlichen runde, insbesondere kreisrunde oder elliptische, Querschnittsfläche 84 aufweisen. Der Grundkörper 36 ist derart ausgebildet, dass die Zirkulationsführungen 50, insbesondere entlang der Mittelachse 42 betrachtet, jeweils eine kreisrunde Querschnittsfläche 84 aufweisen, wobei insbesondere jeweils auch eine elliptische Querschnittsfläche denkbar ist. Der Grundkörper 36 ist derart ausgebildet, dass die Zirkulationsführungen 50 jeweils entlang einer Längserstreckung 86 der jeweiligen Zirkulationsführung 50, insbesondere parallel zur Mittelachse 42, eine im Wesentlichen gleichbleibende Querschnittsfläche 84 aufweisen. Alternativ ist denkbar, dass die Zirkulationsführungen 50 jeweils eine sich verändernde Querschnittsfläche aufweisen, wobei insbesondere die Querschnittsfläche entlang der Längserstreckung 86 der Zirkulationsführungen 50 in Richtung der Ausnehmung 44 kleiner wird oder eine von einer im Wesentlichen runde Querschnittsfläche 84 verschiedene Querschnittsfläche aufweist. Der Aufnahmefortsatz 46 bildet an einer der Stirnseite 48 zugewandten Außenseite eine Fase 88 aus. Es sind auch Ausgestaltungen des Aufnahmefortsatzes 46 mit einer Rundung denkbar. Alternativ oder zusätzlich ist denkbar, dass der Aufnahmefortsatz 46 in einem der Stirnseite 48 zugewandten Endbereich der einzelnen Zirkulationsführungen 50 jeweils eine Rundung oder eine Fase ausbildet, die sich entlang einer Kontur der Querschnittsfläche der jeweiligen Zirkulationsführung 50 erstreckt (in Figuren nicht gezeigt).

Der Grundkörper 36, insbesondere der Aufnahmefortsatz 46, ist derart ausgebildet, dass sich die eine Zirkulationsführungen 50 jeweils im Wesentlichen vollständig über eine maximale Höhe der Anlageflächen 78 erstreckt, wobei insbesondere die maximale Höhe der Anlageflächen 78 jeweils im Wesentlichen parallel zur Mittelachse 42 ausgerichtet ist. Die Zirkulationsführungen 50 erstrecken sich jeweils entlang der Mittelachse 42 in Richtung der Stirnseite 48 des Grundkörpers 36 bis zu einer Kante 90 des Aufnahmefortsatzes 46, die insbesondere die Fase 88 ausbildet, vorzugsweise bis zu einer der Stirnseite 48 zugewandten Unterseite 92 des Aufnahmefortsatzes 46, die eine äußerste Mantelfläche des Aufnahmefortsatzes 46 begrenzt. Insbesondere ist die äußerste Mantelfläche des Aufnahmefortsatzes 46 durch die Führungsflächen 64 und die Anlageflächen 78 gebildet. Der Grundkörper 36, insbesondere der Aufnahmefortsatz 46, erstreckt sich an der Stirnseite 48 in einem Nahbereich um die Mittelachse 42 entlang der Mittelachse 42 über die Unterseite 92 des Aufnahmefortsatzes 46 hinaus, wobei insbesondere der Aufnahmefortsatz 46 in diesem Bereich entlang der Mittelachse 42 betrachtet einen maximalen Außendurchmesser aufweist, der kleiner ist wie ein minimaler Außendurchmesser der äußersten Mantelfläche des Aufnahmefortsatzes 46, an dem insbesondere die Zirkulationsführungen 50 angeordnet sind.

Der Aufnahmefortsatz 46 bildet Begrenzungsflächen 94 aus, welche jeweils die Ausnehmung 44 zumindest teilweise begrenzen und beabstandet von den Zirkulationsführungen 50 ausgebildet sind. Die Begrenzungsflächen 94 sind insbesondere von den Anlageflächen 78 des Aufnahmefortsatzes 46 gebildet bzw. sind entlang der Mittelachse 42 betrachtet kongruent zu diesen ausgebildet. Es ist auch denkbar, dass die Begrenzungsflächen 94 und die Anlageflächen 78 des Aufnahmefortsatzes 46 getrennt voneinander ausgebildet sind und/oder entlang der Mittelachse 42 betrachtet relativ zur Mittelachse 42 radial versetzt zueinander ausgebildet sind. Ein minimaler radialer Abstand 95 der einzelnen Begrenzungsflächen 94 bzw. der Anlageflächen 78 zur Mittelachse 42 ist größer ist als ein minimaler radialer Abstand 96 der die Zirkulationsführung 50 begrenzenden Außenflächen/Führungsflächen 64 des Aufnahmefortsatzes 46 zur Mittelachse 42.

Die Zirkulationsführungen 50 sind entlang der Mittelachse 42 betrachtet im Wesentlichen gleichmäßig um die Mittelachse 42 verteilt angeordnet. Die Zirkulationsführungen 50 sind entlang der Mittelachse 42 betrachtet in einem im Wesentlichen gleichbleibenden Winkelversatz zueinander um die Mittelachse 42 angeordnet. Der Grundkörper 36, insbesondere der Aufnahmefortsatz 46, ist derart ausgebildet, dass eine gemeinsame maximale Breite der Zirkulationsführungen 50 entlang einer Umlaufrichtung um die Mittelachse 42 betrachtet höchstens 40%, vorzugsweise höchstens 50% und besonders bevorzugt höchstens 60%, eines maximalen Außenumfangs des Aufnahmefortsatzes 46 entspricht.

In Figur 4 ist eine schematische Detailansicht von einem Bereich einer Verbindung zwischen der Aufsatzvorrichtung 16 und dem Ventilgehäuse 12 gezeigt. Das Stellventil 10 umfasst eine Verbindungsstelle 98, insbesondere eine Schweißnaht, zur stoffschlüssigen Verbindung der Aufsatzvorrichtung 16 und des Ventilgehäuses 12, wobei die Verbindungsstelle 98 an einer der Ausnehmung 44 abgewandten Außenseite der Verbindungswandung 32 der Aufsatzvorrichtung 16 angeordnet ist. Vorzugsweise umfasst das Stellventil 10 im Bereich der Verbindungsstelle 98 keine weiteren Dichtungsmittel, wie Dichtungsringe o.ä., zu einem Abdichten der Verbindungsstelle 98 nach außen. Die Verbindungsstelle 98 ist an den aneinander anliegenden Außenkanten 100 der Verbindungswandungen 32, 34 der Aufsatzvorrichtung 16 und des Ventilgehäuses 12 angeordnet. Die Verbindungsstelle 98 ist senkrecht zur Mittelachse 42 der Aufsatzvorrichtung 16 betrachtet beabstandet von der Öffnung 30 des Ventilgehäuses 12 bzw. einer, insbesondere der Aufsatzvorrichtung zugewandten und/oder oberen, Außenwand 102 des Ventilgehäuses 12 angeordnet. Die Verbindungswandung 34 des Ventilgehäuses 12 ist derart ausgebildet, dass ein maximaler Innendurchmesser 58 der Verbindungswandung 34 des Ventilgehäuses 12 im Wesentlichen gleich groß ist wie ein maximaler Innendurchmesser 58 der Verbindungswandung 32 der Aufsatzvorrichtung 16. Die Verbindungswandung 34 des Ventilgehäuses 12 ist derart ausgebildet, dass ein maximaler Innendurchmesser 58 der Verbindungswandung 34 des Ventilgehäuses 12 größer ist wie der minimale Innendurchmesser 60 der Öffnung 30 des Ventilgehäuses 12. Besonders bevorzugt ist die Verbindungsstelle 98 an einer Außenseite der Verbindungswandungen 32, 34 angeordnet, wobei sich vorzugsweise die Verbindungswandungen 32, 34 entlang der Mittelachse 42 betrachtet nicht über die die Verbindungsstelle 98 umfassende Außenseite der Verbindungswandungen 32, 34 hinaus erstrecken.

Der Grundkörper 36 ist derart ausgebildet, dass sich die Zirkulationsführungen 50 jeweils parallel zur Mittelachse 42 über einen Großteil der maximalen Höhe 76 der Ausnehmung 44 erstrecken. Vorzugsweise erstrecken sich die Zirkulationsführungen 50 jeweils über die gesamte Höhe 76 der Ausnehmung 44. Bevorzugt erstrecken sich die Zirkulationsführungen 50 jeweils senkrecht zur Mittelachse 42 betrachtet zumindest bis zu einer Höhe der Verbindungsstelle 98. Insbesondere erstrecken sich die Zirkulationsführungen 50 jeweils senkrecht zur Mittelachse 42 betrachtet über die Verbindungsstelle 98 hinaus.

Es sind auch andere Ausgestaltungen der Erfindung denkbar, wobei die Aufsatzvorrichtung 16 bzw. das Stellventil 10 eine von dem oben gezeigten Ausführungsbeispiel abweichende Anzahl an Elementen und/oder Bauteilen aufweisen/aufweist und/oder abweichende Abmessungen bzw. Formen aufweisen/aufweist.

### Bezugszeichen

| | | | |
|---|---|---|---|
| 10 | Stellventil | 56 | Innenwand |
| 12 | Ventilgehäuse | 58 | Innendurchmesser |
| 14 | Drosselstelle | 60 | Innendurchmesser |
| 16 | Aufsatzvorrichtung | 64 | Führungsfläche |
| 18 | Einlassöffnung | 66 | Ende |
| 20 | Auslassöffnung | 68 | Ende |
| 22 | Ventilsitz | 70 | Einlegeteil |
| 24 | Ventilglied | 72 | Dichtbalg |
| 26 | Stellstange | 74 | Höhe |
| 28 | Joch | 76 | Höhe |
| 30 | Öffnung | 78 | Anlagefläche |
| 32 | Verbindungswandung | 80 | Kante |
| 34 | Verbindungswandung | 84 | Querschnittsfläche |
| 36 | Grundkörper | 86 | Längserstreckung |
| 38 | Deckelabschnitt | 88 | Fase |
| 40 | Durchführung | 90 | Kante |
| 42 | Mittelachse | 92 | Unterseite |
| 44 | Ausnehmung | 94 | Begrenzungsfläche |
| 46 | Aufnahmefortsatz | 95 | Abstand |
| 48 | Stirnseite | 96 | Abstand |
| 50 | Zirkulationsführung | 98 | Verbindungsstelle |
| 52 | Fluidkammer | 100 | Außenkante |
| 54 | Ende | 102 | Außenwand |

## Patentansprüche

1. Aufsatzvorrichtung für ein Stellventil (10) einer prozesstechnischen Anlage, mit zumindest einem Grundkörper (36), der einen Deckelabschnitt (38) umfasst, wobei der Deckelabschnitt (38) dazu vorgesehen ist, eine Öffnung (30) eines Ventilgehäuses (12) des Stellventils (10) zu verschließen, wobei der Grundkörper (36) eine Mittelachse (42) aufweist, die sich durch den Deckelabschnitt (38) erstreckt, wobei der Grundkörper (36) eine Verbindungswandung (32) ausbildet, die als Teil des Deckelabschnitts (38) ausgebildet ist und dazu vorgesehen ist, stoffschlüssig mit dem Ventilgehäuse (12), insbesondere einer Wandung des Ventilgehäuses (12), verbunden zu werden, wobei sich die Verbindungswandung (32) entlang der Mittelachse (42) betrachtet im Wesentlichen vollständig um die Mittelachse (42) erstreckt, wobei der Grundkörper (36) über die Verbindungswandung (32) am Deckelabschnitt (38) zur Mittelachse (42) hin eine Ausnehmung (44) begrenzt, und mit zumindest einem Aufnahmefortsatz (46), der zu einer Aufnahme einer Stellstange (26) des Stellventils (10) vorgesehen ist und sich am Deckelabschnitt (38) zu einer Stirnseite (48) des Grundkörpers (36) hin erstreckt, wobei der Aufnahmefortsatz (46) von der Stirnseite (48) aus entlang der Mittelachse (42) betrachtet zumindest teilweise vor der Verbindungswandung (32) angeordnet ist und die Ausnehmung (44) an einer Außenseite begrenzt, **dadurch gekennzeichnet, dass** der Aufnahmefortsatz (46) zumindest eine Zirkulationsführung (50) ausbildet, die dazu vorgesehen ist, in einem mit dem Ventilgehäuse (12) verbundenen Zustand eine Fluidkammer (52) des Ventilgehäuses (12) fluidtechnisch mit der Ausnehmung (44) zu verbinden.

2. Aufsatzvorrichtung nach Anspruch 1, **dadurch gekennzeichnet, dass** die zumindest eine Zirkulationsführung (50) als eine Ausnehmung in einer Außenwand des Aufnahmefortsatzes (46) ausgebildet ist, die sich im Wesentlichen parallel zur Mittelachse (42) erstreckt.

3. Aufsatzvorrichtung nach Anspruch 1 oder 2, **dadurch gekennzeichnet, dass** der Grundkörper (36) derart ausgebildet ist, dass die zumindest eine Zirkulationsführung (50), insbesondere entlang der Mittelachse (42) betrachtet, eine im Wesentlichen runde Querschnittsfläche (84) aufweist.

4. Aufsatzvorrichtung nach einem der vorhergehenden Ansprüche, **dadurch gekennzeichnet, dass** der Aufnahmefortsatz (46) eine im Wesentlichen hohlzylindrische Grundform aufweist, wobei ein um die Mittelachse (42) von einer Innenfläche des Aufnahmefortsatzes (46) ausgebildeter Hohlraum zu einer Aufnahme der Stellstange (26) vorgesehen ist, wobei eine der Mittelachse (42) abgewandte Außenfläche des Aufnahmefortsatzes (46) zumindest teilweise die Ausnehmung (44) begrenzt.

5. Aufsatzvorrichtung nach einem der vorhergehenden Ansprüche, **dadurch gekennzeichnet, dass** der Grundkörper (36) derart ausgebildet ist, dass sich die zumindest eine Zirkulationsführung (50) im Wesentlichen bis zu einem der Stirnseite (48) des Grundkörpers (36) zugewandten Ende (66) des Aufnahmefortsatzes (46) erstreckt.

6. Aufsatzvorrichtung nach einem der vorhergehenden Ansprüche, **dadurch gekennzeichnet, dass** der Grundkörper (36) derart ausgebildet ist, dass sich die zumindest eine Zirkulationsführung (50) parallel zur Mittelachse (42) mindestens über einen Großteil einer maximalen Höhe (76) der Ausnehmung (44) erstreckt.

7. Aufsatzvorrichtung nach einem der vorhergehenden Ansprüche, **dadurch gekennzeichnet, dass** der Aufnahmefortsatz (46) eine Mehrzahl von Zirkulationsführungen (50) ausbildet, die insbesondere im Wesentlichen baugleich ausgebildet sind, wobei die Zirkulationsführungen (50) entlang der Mittelachse (42) betrachtet um die Mittelachse (42) verteilt angeordnet sind.

8. Stellventil für eine prozesstechnische Anlage, mit einem Ventilgehäuse (12), das eine Drosselstelle (14) ausbildet, mit einer Stellstange (26), wobei das Ventilgehäuse (12) eine Öffnung (30) ausbildet, durch die die Stellstange (26) bewegbar ist, und mit einer Aufsatzvorrichtung (16) nach einem der vorhergehenden Ansprüche, wobei die Aufsatzvorrichtung (16) über eine Verbindungswandung (32) der Aufsatzvorrichtung (16) stoffschlüssig mit dem Ventilgehäuse (12) verbunden ist, wobei zumindest eine Zirkulationsführung (50) der Aufsatzvorrichtung (16) eine Fluidkammer (52) des Ventilgehäuses (12) fluidtechnisch mit einer an der Verbindungswandung (32) ausgebildeten Ausnehmung (44) verbindet.

9. Stellventil nach Anspruch 8, **dadurch gekennzeichnet, dass** die Fluidkammer (52) über die zumindest eine Zirkulationsführung (50) durch die Öffnung (30) des Ventilgehäuses (12) fluidtechnisch mit der durch die Aufsatzvorrichtung (16) an der Verbindungswandung (32) ausgebildeten Ausnehmung (44) verbunden ist, wobei die Ausnehmung (44) von der Verbindungswandung (32), einer Wandung des Ventilgehäuses (12) und einem Aufnahmefortsatz (46) der Aufsatzvorrichtung (16) begrenzt ist.

10. Stellventil nach Anspruch 8 oder 9, **gekennzeichnet durch** eine Verbindungsstelle (98), insbesondere eine Schweißnaht, zur stoffschlüssigen Verbindung der Aufsatzvorrichtung und des Ventilgehäuses (12), wobei die Verbindungsstelle (98) an einer der Ausnehmung (44) abgewandten Außenseite der Verbindungswandung (32) angeordnet ist.
